# NEUE EUROPÄISCHE PATENTSCHRIFT

(11) **EP 0 881 193 B2**
(45) Veröffentlichungstag und Bekanntmachung des Hinweises auf die Entscheidung über den Einspruch: **29.08.2007**
(45) Hinweis auf die Patenterteilung: 29.08.2001
(21) Anmeldenummer: 98108483.3
(22) Anmeldetag: 09.05.1998
(51) Int. Cl.: C01B 39/02, B01J 20/18, C08G 18/08, C08K 3/34

(54) **Synthetisches kristallines Zeolithpulver, Verfahren zu seiner Herstellung und Verwendung des Zeolithpulvers**
Synthetic cristalline zeolite powder, its preparation and its use
Zéolite pulvérulente crystalline synthétique, son procédé de préparation et son utilisation

(30) Priorität: 30.05.1997 DE 19722789
(43) Veröffentlichungstag der Anmeldung: 02.12.1998
(73) Patentinhaber: SÜD-CHEMIE AG, 80333 München (DE)
(72) Erfinder: Tissler, Arno, Dr., 93105 Tegernheim (DE)
(74) Vertreter: Splanemann Reitzner Baronetzky Westendorp

(56) Entgegenhaltungen:
- EP-A- 0 310 916
- EP-A- 0 406 474
- EP-A- 0 671 422
- WO-A-91/11414
- WO-A-94/13754
- US-A- 4 861 570
- US-A- 4 873 067
- US-A- 5 013 422
- US-A- 5 105 023
- US-A- 5 220 089
- US-A- 5 554 274
- P.K. Bajpai "Synthesis of mordernite type zeolite", Zeolites, 1986, Volume 6, pages 2-8

## Beschreibung

Die Erfindung betrifft ein synthetisches kristallines Zeolithpulver mit einem SiO₂/Al₂O₃-Verhältnis von größer/gleich 5, hergestellt durch hydrothermale Reaktion aus einer Quelle für SiO₂, einer Quelle aus Al₂O₃, einer Alkali-Quelle, wasser und ohne Zusatz eines organischen Zusatzstoffs und Überführung in den für eine katalytische Reaktion geeigneten "aktivierten Zustand" sowie ein Verfahren zu seiner Herstellung und die Verwendung des Zeolithpulvers als Adsorbents in Klebe- und Dichtmassen.

Zeolithe sind mikroporöse kristalline Alumosilikate, die entweder natürlich vorkommen oder synthetisch hergestellt werden, z.B. gemäß US-A-3 702 888 oder US-A-5 385 714. Nach einer Modellvorstellung sind Zeolithe aus SiO₂- und Al₂O₃-Tetraedern aufgebaut. Anstelle des Aluminiums können aber auch andere Elemente wie Gallium, Eisen sowie dreiwertige oder vierwertige Elemente treten, die die Modellstruktur und Eigenschaften der Zeolithe beeinflussen.

Zeolithe besitzen ein definiertes Hohlraumsystem mit Öffnungsweiten von 0,3 bis 1,2 nm. Sie werden in der Regel als Kationenaustauscher eingesetzt, wobei das hydrophile oder hydrophobe Verhalten über das Silizium/Aluminium-Atom-Verhältnis steuerbar ist.

Synthetische Zeolithe werden heute im großen Maßstab als Ersatz für Phosphate in Waschmitteln und in Trenn- und Adsorptionsprozessen eingesetzt. Hierzu sind jedoch noch weitere Behandlungsmaßnahmen, wie z.B. ein Ionenaustausch bzw. eine Wärmebehandlung durchzuführen.

Siliziumreiche Zeolithe zeigen eine hohe thermische Stabilität, so daß ihre Struktur auch bei Temperaturen oberhalb von 700 °C im wesentlichen beibehalten wird. Tauscht man bei siliziumreichen Zeolithen die in der Syntheseform vorliegenden Kationen gegen Wasserstoffkationen aus, zeigen die so "modifizierten" Zeolithmaterialien eine hohe Festkörperazidität. Diese ist Voraussetzung für den Einsatz der Zeolithe als Komponenten in Katalysatoren für Petrochemische-, Chemische- und Umweltverfahren.

Aus der US-A-4 873 067 ist ein Katalysatormaterial für organische Reaktionen, wie beispielsweise Konversionsreaktionen, Cracken von Kohlenwasserstoffen etc., bekannt, das aus einem Zeolithpulver mit einem SiO₂/Al₂O₃-Verhältnis von größer 5 besteht, dessen alpha-Wert unter 250 und dessen Constraint-Index bei 6,3 liegt. Der Constraint-Index ist ein Maß für die Selektivität des Katalysatormaterials und umfasst die Konversion von Hexan- und 3-Methylpenta-Verbindungen gemäß Testbeschreibung in US 4 231 899 und US 4 288 647.

Aus der DE-A-19 28 129 und der EP-A-0 310 916 ist der Einsatz von Zeolithen als Adsorbentien bzw. als Füllstoff in Polyurethan-Massen bekannt. Ziel dieses Einsatzes von zeolithischen Adsorbentien ist es, lösungsmittelfreie Beschichtungen, Klebstoffe und Dichtmassen herzustellen, die sich durch eine schnelle Aushärtung, hohe Widerstandsfähigkeit gegen äußere Einwirkungen und große Elastizität auszeichnen.

Durch die verschiedenen Einsatzkomponenten werden bei der Herstellung von Polyurethansystemen geringe Spuren von Feuchtigkeit eingebracht. Damit reagieren die in den Polyurethansystemen vorhandenen Isocyanat-Gruppen und setzen Kohlendioxid frei, das zu einer schaumartigen Blasenbildung führt. Die Schaumbildung bewirkt eine Reihe von unerwünschten Effekten, insbesondere eine Verschlechterung der mechanischen Eigenschaften, die die Einsatzbarkeit der Polyurethanmassen stark einschränken. Die geschäumten Massen quellen aus den Klebe- und Dichtfugen heraus und beeinträchtigen dadurch die Glattheit der Oberflächen.

Darüber hinaus können auch die an den Oberflächen gebildeten Poren Luftfeuchtigkeit bis an die zu verklebenden Systeme heranführen und dadurch die Korrosionseigenschaften des gesamten Verbundes nachhaltig verschlechtern. Seit dem Einsatz der Zeolithe als Adsorbentien/Füllstoffe in Polyurethanmassen wird daher nach Mitteln und Wegen gesucht, die es ermöglichen, die vorgegebenen mechanischen Festigkeitswerte für Verbundmassen auch über eine längere Zeitdauer zu garantieren.

Zunächst wurde versucht, mit den bekannten Zeolithpulvern des A- und X-Typs die negativen Auswirkungen des Eindringens von Feuchtigkeit sowie die Blasenbildung an sich zu verhindern bzw. herabzusetzen. Dies gelang aber nur durch Inkaufnahme einer Reihe weiterer Nachteile, so daß man letztendlich noch keinen Weg gefunden hat, der zu den gewünschten optimalen Eigenschaften führt.

Anhand von Versuchen wurde festgestellt, daß bei Zeolithpulvern des Typs A und X der hohe strukturell notwendige Alkalianteil mit der Kleberkomponente reagiert. Dadurch tritt eine Verseifung der gebildeten Ester ein, die die Lagerstabilität derart hergestellter Verbundmassen herabsetzt.

Auch eine Reduktion der Alkalianteile bekannter siliziumreicher Zeolithe führte nicht zum Ziel. Es wurde nämlich festgestellt, daß nach Einarbeitung der Zeolithpulver in Polyurethanpolymere unerwünschte prepolymere Oligomerisierungsreaktionen auftraten, die zu einer starken Verfärbung des Verbundmasse führten. Weiterhin wurde eine Verschlechterung der Verarbeitbarkeit beobachtet, insbesondere im Hinblick auf ein ungleichmäßiges Viskositätsverhalten. Ionenausgetauschte, siliziumreiche Zeolithe besitzen auch nur eine geringe Wasseradsorptionskapazität, so daß ihre Verwendung als Adsorptionsmittel bei der Herstellung von Polyurethansystemem nicht zum Erfolg führte.

Aufgabe der vorliegenden Erfindung ist es daher, Zeolithpulver der eingangs genannten Art mit für die Herstellung von Klebe- und Dichtmassen geeigneter Zeolithstruktur herzustellen, das sich insbesondere als Adsorbens in Polyurethansystemen eignet, insbesondere ein hohes Wasseradsorptionsvermögen aufweist, keine Oligomerisierungsreaktionen katalysiert und eine gleichbleibend gute Verarbeitbarkeit garantiert. Die unter Verwendung des neuen Zeolithpulvers hergestellten Verbundmassen sollen gute mechanische Eigenschaften, insbesondere gute Korrosionseigenschaften aufweisen und lagerstabil sein.

Ein zur Herstellung des vorbeschriebenen Zeolithpulvers geeignetes Verfahren soll eine großtechnische Herstellung mit den bereits vorhandenen Syntheseaggregaten ermöglichen, wobei auf die Zuhilfenahme von organischen Zusatzstoffen verzichtet werden soll.

Diese Aufgabe wird erfindungsgemäß durch die in den Patentansprüchen angegebenen Merkmale gelöst. Es hat sich gezeigt, daß das erfindungsgemäße Zeolithpulver insbesondere als Adsorbens in Klebe- und Dichtmassen basierend auf Polyurethansystemen geeignet ist. Das neue Herstellungsverfahren ist umweltfreundlich. Nach Einarbeitung des Zeolithpulvers in Polyurethanprepolymere sollen lagerstabile, im wesentlichen unverfärbte Produkte bzw. Verbundmassen entstehen, die blasenfrei aushärten.

Die Wasseradsorptionskapazität wird bezogen auf den aktivierten (wasserfreien) Zeolith und beträgt mindestens 5 Gew.-% gemessen in gr H₂O/100 gr Adsorbens. Die Crack-Aktivität wird nach dem im Journal of Catalysis, Vol. VI., Seiten 278 - 287, 1966 und US 4 326 994 beschriebenen alpha-Test berechnet und beträgt erfindungsgemäß kleiner oder gleich 250, vorzugsweise kleiner 50. Durch Modifizierung des Zeolithpulvers konnte ein pH-Wert gemessen nach DIN 53200 von kleiner/gleich 7 erhalten werden. Weitere Einzelheiten sind der nachfolgenden Verfahrensbeschreibung zu entnehmen.

Die Primärsynthese der Zeolithpulver kann in bekannter Weise wie in US-A-5 385 714 auf rein anorganischem Wege durchgeführt werden.

Das Zeolithpulver wird anschließend in bekannter Weise mit einer Ammoniumverbindung oder einer Säure ionengetauscht, bis der Alkaligehalt des Zeolithpulvers den gewünschten niedrigen Wert von kleiner 0,2 Gew.-% besser kleiner 0,1 Gew.-% aufweist.

Überraschenderweise hat sich gezeigt, daß man ein neutral bzw. leicht sauer eingestelltes Zeolithpulver mit sehr guten Adsorptionseigenschaften und stabilisierender Wirkung auf lösungsmittelfreie Polyurethansystemen erhält, wenn die aziden Zentren in der nachfolgend beschriebenen Weise modifiziert bzw. gedämpft werden. Dies kann einmal durch einen weiteren Ionentausch mit Metallkationen und eine anschließende Aktivierung des Zeolithpulvers bei Temperaturen von oberhalb von 400 °C geschehen und andererseits durch eine direkte Wärmebehandlung mit oder ohne Wasserdampfzusatz bei Temperaturen von oberhalb von 600 °C. Anschließend werden die Zeolithpulver luftdicht verpackt.

Die erfindungsgemäßen Zeolithpulver können in bekannter Weise in lösungsmittelfreie Polyurethansysteme, wie Polyurethankleber, Polyurethandichtmassen, Polyurethangießmassen und Polyurethan-beschichtungen eingearbeitet werden. Im folgenden werden anhand von 4 bevorzugten Beispielen die erfindungsgemäßen Zeolithpulver und die erfindungsgemäßen Herstellungsverfahren näher erläutert.

### Erfindungsbeispiele

### Beispiel 1

Ein gemäß US-A-5 385 714 Beispiel 1 hergestelltes Zeolithpulver vom Pentasil-Typ mit einem SiO₂/Al₂O₃-Verhältnis von 27 wird (zur Aktivierung) in bekannter Weise mit Ammoniumnitrat mehrfach ionengetauscht und weist anschließend einen Na₂O-Gehalt (Gew.-% in Trockenmasse) von 0,03 auf. Danach werden durch einen in an sich bekannter Weise durchgeführten Ionenaustausch mit Metallkationen (insbesondere der Übergangsmetalle) die aziden Zentren gedämpft und zum Teil inaktiviert. Diesen Vorgang kann man auch als "Vergiftung" bezeichnen. Das bei 110 °C getrocknete und bei 450 °C aktivierte Zeolithpulver zeigt bei 20 °C und 23,4 mbar Wasserdampfpartialdruck eine Wasseradsorption von 9,4 gr H₂O/100 gr Adsorbens, einen pH-Wert nach DIN 5200 von 6,5 und eine Crack-Aktivität/alpha-Test nach US-A-3 354 078 von 30. Beim Einsatz dieses Materials in verschiedenen Polyurethansystemen ist keine Blasenbildung vorhanden. Ein unter Verwendung des Materials hergestelltes Verbundmaterial ist lagerstabil. Es zeigt sich eine leichte bräunliche Verfärbung, die den technischen Einsatz der Polyurethanmassen aber nicht beeinträchtigt.

### Beispiel 2

Ein gemäß US-A-5 385 714 Beispiel 1 hergestelltes Zeolithpulver vom Pentasil Typ mit einem SiO₂/Al₂O₃-Verhältnis von 27 wird in bekannter Weise mit Ammoniumnitrat mehrfach ionengetauscht und weist anschließend einen Na₂O-Gehalt (Gew.-% in Trockenmasse) von 0,03 auf.
Das Material wird in einem Drehrohrofen bei 700 °C an Luft thermisch behandelt.
Das bei 450 °C konditionierte Zeolithpulver zeigt bei 20 °C und 23,4 mbar Wasserdampf partialdruck eine Wasseradsorption von 10,5 gr H₂O/100 gr Adsorbens, einen pH-Wert nach DIN 53200 von 5,5 und eine Crack-Aktivität/alpha-Test nach US-A-3 354 078 von 120. Beim Einsatz dieses Materials in verschiedenen Polyurethansystemen ist keine Blasenbildung vorhanden, das Material ist lagerstabil. Es zeigt sich eine leichte rötliche Verfärbung, die den technischen Einsatz der Polyurethanmassen aber nicht beeinträchtigt.

### Beispiel 3

Ein gemäß US-A-5 385 714 Beispiel 1 hergestelltes Zeolithpulver vom Pentasil Typ mit einem SiO₂/Al₂O₃-Verhältnis von 24 wird in bekannter Weise mit Ammoniumnitrat mehrfach ionengetauscht und weist anschließend einen Na₂O-Gehalt (Gew.-% in Trockenmasse) von 0,05 auf.
Das Material wird in einem Drehrohrofen unter Einblasen von Wasserdampf bei 700 °C hydrothermisch behandelt.
Das bei 450 °C konditionierte Zeolithpulver zeigt bei 20 °C und 23,4 mbar Wasserdampfpartialdruck eine Wasseradsorption von 11,8 gr H₂O/100 gr Adsorbens, einen pH-Wert nach DIN 53200 von 5,9 und eine Crack-Aktivität/alpha-Test nach US-A-3 354 078 von 30. Beim Einsatz dieses Materials in verschiedenen Polyurethansystemen ist keine Blasenbildung vorhanden, das Verbundmaterial ist lagerstabil. Es zeigt sich keinerlei Verfärbung.

### Beispiel 4

Ein Zeolithpulver vom Mordenith-Typ mit einem SiO₂/Al₂O₃-Verhältnis von 12 wurde gemäß der Beschreibung von P.K. Bajpai, Zeolites, 6,2 (1986) hergestellt. Anschließend wird das Zeolithpulver in bekannter Weise mit Ammoniumnitrat mehrfach ionengetauscht und weist anschließend einen Na₂O-Gehalt (Gew.-% in Trockenmasse) von 0,1 auf.
Das Material wird in einem Drehrohrofen unter Einblasen von Wasserdampf bei 700 °C hydrothermisch behandelt.
Das bei 450 °C konditionierte Zeolithpulver zeigt bei 20 °C und 23,4 mbar Wasserdampfpartialdruck eine Wasseradsorption von 15,2 gr H₂O/100 gr Adsorbens, einen pH-Wert nach DIN 53200 von 6,1 und eine Crack-Aktivität/alpha-Test nach US-A-3 354 078 von 20. Beim Einsatz dieses Materials in verschiedenen Polyurethansystemen ist keine Blasenbildung vorhanden, das Verbundmaterial ist lagerstabil. Es zeigt sich keinerlei Verfärbung.

### Beispiel 5

Ein Zeolithpulver vom Mordenith-Typ mit einem SiO₂/Al₂O₃-Verhältnis von 12 wurde gemäß Beispiel 4 hergestellt. Anschließend wird das Zeolithpulver in bekannter Weise mit Ammoniumnitrat mehrfach ionengetauscht und weist anschließend einen Na₂O-Gehalt (Gew.-% in Trockenmasse) von 0,05 auf.
Das Material wird in einem Drehrohrofen unter Einblasen von Wasserdampf bei 850 °C hydrothermisch behandelt.
Das bei 450 °C konditionierte Zeolithpulver zeigt bei 20 °C und 23,4 mbar Wasserdampfpartialdruck eine Wasseradsorption von 15,0 gr H₂O/100 gr Adsorbens, einen pH-Wert nach DIN 53200 von 5,5 und eine Crack-Aktivität/alpha-Test nach US-A-3 354 078 von 10. Beim Einsatz dieses Materials in verschiedenen Polyurethansystemen ist keine Blasenbildung vorhanden, das Verbundmaterial ist lagerstabil. Es zeigt sich keinerlei Verfärbung.

### Vergleichsbeispiel 1

Ein gemäß US-A-5 385 714, Beispiel 1 hergestelltes Zeolithpulver vom Pentasil-Typ mit einem SiO₂/Al₂O₃-Verhältnis von 27 weist einen Na₂O-Gehalt (Gew.-% in Trockenmasse) von 5,9 auf.
Das bei 450°C konditionierte Zeolithpulver zeigt bei 20°C und 23,4 mbar Wasserdampfpartialdruck eine Wasseradsorption von 9,5 gr H₂O/100 gr Adsorbens, einen pH-Wert nach DIN 53200 von 10,5 und eine Crack-Aktivität/alpha-Test nach US-A-3 354 078 von 12. Beim Einsatz dieses Materials in einem Polyurethankleber ist deutliche Blasenbildung vorhanden, das Material ist extrem lagerinstabil. Ein technischer Einsatz dieser Polyurethanmassen ist nicht möglich.

### Vergleichsbeispiel 2

Ein gemäß US-A-5 385 714, Beispiel 1 hergestelltes Zeolithpulver vom Pentasil-Typ mit einem SiO₂/Al₂O₃-Verhältnis von 27 wird in bekannter Weise mit Ammoniumnitrat mehrfach ionengetauscht und weist anschließend einen Na₂O-Gehalt (Gew.-% in Trockenmasse) von 0,03 auf.
Das bei 450°C konditionierte Zeolithpulver zeigt bei 20°C und 23,4 mbar Wasserdampfpartialdruck eine Wasseradsorption von 9,5 gr H₂O/100 gr Adsorbens, einen pH-Wert nach DIN 53200 von 5,5 und eine Crack-Aktivität/alpha-Test nach US-A-3 354 078 von 370. Beim Einsatz dieses Materials in eine Polyurethandichtmasse ist eine leichte Blasenbildung vorhanden, das Material ist nicht lagerstabil. Es zeigt sich eine starke rötliche bis dunkelbraune Verfärbung, die den technischen Einsatz dieser Polyurethandichtmassen unmöglich macht.

### Vergleichsbeispiel 3

Das Zeolithpulver vom Mordenith-Typ mit einem SiO₂/Al₂O₃-Verhältnis von 12 wurde gemäß der Beschreibung von P.K. Bajpai, Zeolites, 6,2 (1986) hergestellt. Das Zeolithpulver weist einen Na₂O-Gehalt (Gew.-% in Trockenmasse) von 12 auf.
Das bei 450°C konditionierte Zeolithpulver zeigt bei 20°C und 23,4 mbar Wasserdampfpartialdruck eine Wasseradsorption von 13,8 gr H₂O/100 gr Adsorbens, einen pH-Wert nach DIN 53200 von 11 und eine Crack-Aktivität/alpha-Test nach US-A-3 354 078 von 8.
Beim Einsatz dieses Materials in einer Polyurethangießmasse ist eine leichte Blasenbildung vorhanden, das Verbundmaterial ist nicht lagerstabil und technisch nicht verarbeitbar.

### Vergleichsbeispiel 4

Das Zeolithpulver vom Mordenith-Typ mit einem SiO₂/Al₂O₃-Verhältnis von 12 wurde gemäß der Beschreibung von P.K. Bajpai, Zeolites, 6,2 (1986) hergestellt. Anschließend wird das Zeolithpulver in bekannter Weise mit Ammoniumnitrat mehrfach ionengetauscht und weist anschließend einen Na₂O-Gehalt (Gew.-% in Trockenmasse) von 0,1 auf.
Das bei 450°C konditionierte Zeolithpulver zeigt bei 20°C und 23,4 mbar Wasserdampfpartialdruck eine Wasseradsorption von 14,6 gr H₂O/100 gr Adsorbens, einen pH-Wert nach DIN 53200 von 6,1 und eine Crack-Aktivität/alpha-Test nach US-A-3 354 078 von 320. Beim Einsatz dieses Materials für eine Polyurethanbeschichtung ist eine leichte Blasenbildung vorhanden, das Verbundmaterial ist nicht lagerstabil. Es zeigt sich eine starke rotbraune bis schwarze Verfärbung. Das Material ist technisch nicht verarbeitbar.

## Patentansprüche

1. Synthetisches kristallines Zeolithpulver mit einem SiO₂/Al₂O₃-Verhältnis von größer/gleich 5, hergestellt durch hydrothermale Reaktion aus einer Quelle für SiO₂, einer Quelle aus Al₂O₃, einer Alkaliquelle, Wasser und ohne Zusatz eines organischen Zusatzstoffs, Überführung in den für eine katalytische Reaktion geeigneten "aktivierten Zustand" und Durchführung einer thermischen Weiterbehandlung bis zum Erreichen der gewünschten katalytischen Aktivität, **dadurch gekennzeichnet, dass** der Alkaligehalt des Zeolithpulvers im aktivierten Zustand unter 0,5 Gew.-% liegt, die Wasseraufnahmekapazität größer als 5 Gew.-% ist, der α-Wert unter 250 liegt und das Zeolithpulver einen pH-Wert von unter 7 aufweist.

2. Synthetisches Zeolithpulver nach Anspruch 1, **dadurch gekennzeichnet, dass** das SiO₂/Al₂O₃-Verhältnis größer als 10 ist.

3. Synthetisches Zeolithpulver nach einem der vorhergehenden Ansprüche, **dadurch gekennzeichnet, dass** der Alkaligehalt des Zeolithpulvers im aktivierten Zustand unter 0,1 Gew.-% liegt.

4. Synthetisches Zeolithpulver nach einem der vorhergehenden Ansprüche, **dadurch gekennzeichnet, dass** die Wasseraufnahmekapazität des Zeolithpulvers im aktivierten Zustand größer als 10 % ist.

5. Synthetisches Zeolithpulver nach einem der vorhergehenden Ansprüche, **dadurch gekennzeichnet, dass** der α-Wert des Zeolithpulvers , im aktivierten Zustand unter 100, bevorzugt unter 50 liegt.

6. Synthetisches Zeolithpulver nach einem der vorhergehenden Ansprüche, **dadurch gekennzeichnet, dass** das Zeolithpulver im aktivierten Zustand einen pH-Wert von unter 6 aufweist.

7. Synthetisches Zeolithpulver nach einem der vorhergehenden Ansprüche, **dadurch gekennzeichnet, dass** die Struktur des Zeolithpulvers vom MFI-Typ (Pentasil-Zeolith) ist.

8. Synthetisches Zeolithpulver nach einem der vorhergehenden Ansprüche, **dadurch gekennzeichnet, dass** die Struktur des Zeolithpulvers vom MOR-Typ (Mordenit-Zeolith) ist.

9. Verfahren zur Herstellung eines synthetischen kristallinen Zeolithpulvers nach einem der vorhergehenden Ansprüche, **dadurch gekennzeichnet, dass** die thermische Weiterbehandlung solange erfolgt, bis die aziden Zentren soweit gedämpft sind, dass der α-Wert unter 250 liegt, wobei die Herstellung des Zeolithpulvers ohne Zuhilfenahme von organischen Zusatzstoffen geführt wird.

10. Verfahren nach Anspruch 9, **dadurch gekennzeichnet, dass** zur Einstellung der gewünschten Eigenschaften des Zeolithpulvers eine Temperaturbehandlung an Luft- und/oder Wasserdampfatmosphäre oder einem anderen Gas bei Temperaturen von größer 400 °C erfolgt.

11. Verfahren nach einem der Ansprüche 9 bis 10, **dadurch gekennzeichnet, dass** die Temperaturbehandlung zur Einstellung der gewünschten Eigenschaften des Zeolithpulvers bei Temperaturen größer 600 °C durchgeführt wird.

12. Verfahren nach einem der Ansprüche 9 bis 11, **dadurch gekennzeichnet, dass** zur Einstellung der gewünschten Eigenschaften des Zeolithpulvers eine Vergiftung der aziden Zentren der Metallkationen durchgeführt wird.

13. Verwendung eines synthetischen kristallinen Zeolithpulvers, hergestellt nach einem der Ansprüche 9 bis 12 in lösungsmittelfreien Polyurethan-Systemen.

14. Verwendung eines synthetischen kristallinen Zeolithpulvers, hergestellt nach einem der Ansprüche 9 bis 12, **dadurch Gekennzeichnet, dass** das Zeolithpulver in Polyurethan-Klebern eingesetzt wird.

15. Verwendung eines synthetischen kristallinen Zeolithpulvers, hergestellt nach einem der Ansprüche 9 bis 12, **dadurch gekennzeichnet, dass** das Zeolithpulver zur Herstellung von Polyurethan-Dichtmassen eingesetzt wird.

16. Verwendung eines synthetischen kristallinen Zeolithpulvers, hergestellt nach einem der Ansprüche 9 bis 12, **dadurch gekennzeichnet, dass** das Zeolithpulver in Polyurethan-Gießmassen eingesetzt wird.

17. Verwendung eines synthetischen kristallinen Zeolithpulvers, hergestellt nach einem der Ansprüche 9 bis 12, **dadurch gekennzeichnet, dass** das Zeolithpulver in Polyurethan-Beschichtungen eingesetzt wird.

## Claims

1. A synthetic crystalline zeolite powder with a Si0₂/A1₂0₃ ratio of greater than/equal to 5 produced by hydrothermal reaction from a source for SiO₂, a source for Al₂O₃, an alkali source, water and optionally an organic additive, transfer into the "activated condition" suitable for a catalytic reaction and execution of a further thermal treatment until the required catalytic activity has been achieved, **characterised in that** the alkali content of the zeolite powder in the activated condition is below 0.5 % by weight, the water absorption capacity is greater than 5 % by weight, the α-value is below 250 and the zeolite powder has a pH-value of less than 7.

2. A synthetic zeolite powder according to claim 1, **characterised in that** the SiO₂/Al₂O₃ ratio is greater than 10.

3. A synthetic zeolite powder according to any one of the preceding claims, **characterised in that** the alkali content of the zeolite powder in the activated condition is less than 0.1 % by weight.

4. A synthetic zeolite powder according to any one of the preceding claims, **characterised in that** the water absorption capacity of the zeolite powder in the activated condition is greater than 10%.

5. A synthetic zeolite powder according to any one of the preceding claims, **characterised in that** the α-value of the zeolite powder in the activated condition is below 100, preferably below 50.

6. A synthetic zeolite powder according to any one of the preceding claims, **characterised in that** the zeolite powder in the activated condition has a pH-value of less than 6.

7. A synthetic zeolite powder according to any one of the preceding claims, **characterised in that** the structure of the zeolite powder is of the MFI-type (pentasil zeolite).

8. A synthetic zeolite powder according to any one of the preceding claims, **characterised in that** the structure of the zeolite powder is of the MOR-type (mordenite zeolite).

9. A method of producing a synthetic crystalline zeolite powder according to any one of the preceding claims, **characterised in that** the further thermal treatment continues until the acid centres are dampened to such an extent that the α-value is below 250, with the production of the zeolite powder taking place with the assistance of organic additives.

10. A method according to claim 9, **characterised in that** for the purpose of setting the required properties of the zeolite powder, there takes place a temperature treatment in an air and/or water vapour or another gas atmosphere at temperatures in excess of 400 °C.

11. A method according to any one of claims 9 to 10, **characterised in that** the temperature treatment for setting the required properties of the zeolite powder is carried out at temperatures in excess of 600 °C.

12. A method according to any one of claims 9 to 11, **characterised in that** for setting the required properties of the zeolite powder, the acid centres of the metal cations are poisoned.

13. The use of a synthetic crystalline zeolite powder produced in accordance with any one of claims 9 to 12 in solvent-free polyurethane systems.

14. The use of a synthetic crystalline zeolite powder produced in accordance with any one of claims 9 to 12, **characterised in that** the zeolite powder is used in polyurethane glues.

15. The use of a synthetic crystalline zeolite powder produced in accordance with any one of claims 9 to 12, **characterised in that** the zeolite powder is used for producing polyurethane sealing substances.

16. The use of a synthetic crystalline zeolite powder produced in accordance with any one of claims 9 to 12, **characterised in that** the zeolite powder is used in polyurethane casting substances.

17. The use of a synthetic crystalline zeolite powder produced in accordance with any one of claims 9 to 12, **characterised in that** the zeolite powder is used in polyurethane coatings.

## Revendications

1. Poudre de zéolite cristalline synthétique avec un rapport SiO2/AI20 supérieur/égal a 5, préparée par réaction hydrothermale à partir d'une source pour Si0₂, d'une source de Al₂0₃, d'une source d'alcali, d'eau et éventuellement d'un additif organique, transformation en 1' "état activé" approprié pour une réaction catalytique et réalisation d'un traitement thermique ultérieur jusqu'a atteindre l'activité catalytique souhaitée, **caractérisée en ce que** la teneur en alcali de la poudre de zéolite a l'état activé est inférieure à 0,5% en poids, la capacité d'absorption d'eau est supérieure à 5% en poids, la valeur α est inférieure à 250 et la poudre de zéolite presente une valeur de pH inférieure à 7.

2. Poudre de zéolite synthétique selon la revendication 1, **caractérisée en ce que** le rapport Si0₂/Al₂0₃ est supérieur à 10.

3. Poudre de zéolite synthétique selon l'une quelconque des revendications précédentes, **caractérisée en ce que** la teneur en alcali de la poudre de zéolite a l'état activé est inférieure à 0,1% en poids.

4. Poudre de zéolite synthétique selon l'une quelconque des revendications précédentes, **caractérisée en ce que** la capacité d'absorption d'eau de la poudre de zéolite a l'état activé est supérieure à 10%.

5. Poudre de zéolite synthétique selon l'une quelconque des revendications précédentes, **caractérisée en ce que** la valeur α de la poudre de zéolite a l'état activé est inférieure à 100, de préférence inférieure à 50.

6. Poudre de zéolite synthétique selon l'une quelconque des revendications précédentes, **caractérisée en ce que** la poudre de zéolite a l'état activé présente une valeur de pH inférieure à 6.

7. Poudre de zéolite synthétique selon l'une quelconque des revendications précédentes, **caractérisée en ce que** la structure de la poudre de zéolite est de type MFI (zéolite-pentasil).

8. Poudre de zéolite synthétique selon l'une quelconque des revendications précédentes, **caractérisée en ce que** la structure de la poudre de zéolite est de type MOR (zéolite-mordénite).

9. Procédé pour la préparation d'une poudre de zéolite cristalline synthétique selon l'une quelconque des revendications précédentes, **caractérisé en ce que** le traitement thermique ultérieur est réalisé jusqu'à ce que les centres azide sont évaporés de telle sorte que la valeur α est inférieure à 250, la préparation de la poudre de zéolite étant réalisée sans l'aide d'additifs organiques.

10. Procédé selon la revendication 9, **caractérisé en ce que** l'on réalise un traitement thermique dans une atmosphère d'air et/ou de vapeur d'eau ou d'un autre gaz à des températures supérieures à 400°C pour ajuster les caractéristiques souhaitées de la poudre de zéolite.

11. Procédé selon l'une quelconque des revendications 9 à 10, **caractérisé en ce que** l'on réalise le traitement thermique pour l'ajustement des caractéristiques souhaitées de la poudre de zéolite à des températures supérieures à 600°C.

12. Procédé selon l'une quelconque des revendications 9 a 11 **caractérisé en ce que** l'on réalise un empoisonnement des centres azide des cations métalliques, pour l'ajustement des caractéristiques souhaitées de la poudre de zéolite.

13. Utilisation d'une poudre de zéolite cristalline synthétique préparée selon l'une quelconque des revendications 9 à 12 dans des systèmes de polyuréthanne exempts de solvant.

14. Utilisation d'une poudre de zéolite cristalline synthétique préparée selon l'une quelconque des revendications 9 à 12, **caractérisée en ce que** l'on utilise la poudre de zéolite dans des colles de polyuréthanne.

15. Utilisation d'une poudre de zéolite cristalline synthétique préparée selon l'une quelconque des revendications 9 à 12, **caractérisée en ce que** l'on utilise la poudre de zéolite pour la préparation de masses étanches de polyuréthanne.

16. Utilisation d'une poudre de zéolite cristalline synthétique préparée selon l'une quelconque des revendications 9 à 12, **caractérisée en ce que** l'on utilise la poudre de zéolite dans des masses de moulages de polyuréthanne.

17. Utilisation d'une poudre de zéolite cristalline synthétique préparée selon l'une quelconque des revendications 9 a 12, **caractérisée en ce que** l'on utilise la poudre de zéolite dans des revêtements de polyuréthanne.
